# EUROPÄISCHE PATENTANMELDUNG

(11) **EP 0 883 018 A1**
(43) Veröffentlichungstag der Anmeldung: **09.12.1998**
(21) Anmeldenummer: 98107908.0
(22) Anmeldetag: 30.04.1998
(51) Int. Cl.: G03B 17/24, G03B 19/18

(54) **Anordnung zur Einblendung des Bildes einer Anzeigevorrichtung in das Objektiv einer Filmkamera**

(30) Priorität: 06.06.1997 DE 19723840
(71) Anmelder: Volkswagen Aktiengesellschaft, 38436 Wolfsburg (DE)
(72) Erfinder: Bloch, Willi, 38458 Velpke (DE)

(57) **Zusammenfassung**

Die Erfindung bezieht sich auf die Anordnung eines Displays zur Mitabbildung auf den Bildern einer Filmkamera, bei der das Display im Abstand vor einem zu filmenden bewegten Objekt angeordnet ist. Sie löst die Aufgabe, die Anordnung so zu gestalten, daß das Display auf den Filmbildern stets in dem gleichen vorbestimmbaren Bereich mit abgebildet wird, kontrastreich und scharf ist. Dazu ist das Display (3) kameranah angeordnet und mit der Filmkamera (1) und mit einem Linsensystem (4) zur Schärfekorrektur verbunden, das im Zusammenwirken mit dem Objektiv (8) der Filmkamera (1) von dem Display (3) ein scharfes Bild auf dem jeweiligen Filmbild erzeugt.

## Beschreibung

Die Erfindung betrifft die Anordnung eines Displays zur Mitabbildung auf Filmkamerabildern, die insbesondere von einem bewegten Objekt in Folge aufgenommen werden.

Zur Auswertung von mit einer Filmkamera aufgenommenen Bewegungsabläufen ist es oftmals erforderlich, diese in Relation zur Zeit zu setzen, um aus den gewonnenen Filmbildern Rückschlüsse aus dem Verhalten des bewegten Objektes bei einem bestimmten Vorgang ziehen zu können, beispielsweise aus dem Verhalten eines Fahrzeuges bei einem Crash-Test, der das Unfallverhalten von Fahrzeugen simuliert. Bei einem solchen Test prallt das durch einen Fremdantrieb, z.B. einen Seilzug, auf eine vorbestimmte Geschwindigkeit beschleunigte Fahrzeug auf ein Hindernis und wird beschädigt oder zerstört. Die auftretenden Karosserieverformungen und die auf eine im Fahrzeug positionierte Testpuppe einwirkenden Verzögerungen und Kräfte werden ermittelt und dienen als Kriterium für den Grad der zu erwartenden Verletzungen und auch als Basis für Weiterentwicklungen am und Maßnahmen zur Erhöhung der Sicherheit im Fahrzeug.

Um die Vorgänge bei einem Aufprall dokumentieren zu können, wird das Crash-Fahrzeug aus verschiedenen Positionen heraus gefilmt. Dabei werden im Filmaufnahmebereich Displays zur digitalen Zeitanzeige als sogenannte Crash-Uhren positioniert, die simultan gesteuert werden, so daß die aus verschiedenen Positionen aufgenommenen Bilder einem einheitlichen Zeitpunkt zuordenbar sind. Die auf einem Display angezeigte Zeit erscheint dann jeweils auf dem von der Filmkamera aufgenommenem Filmbild, der das Display zugeordnet ist.

Dabei erweist es sich als nachteilig, daß die auf den Filmbildern der Filmkamera erscheinenden Displays, auch als Crash-Uhren bekannt, einen Teil des Crash-Fahrzeuges verdecken, was zu Informations- und Auswertungslücken führen kann. Die Displays sind zwischen dem Crash-Fahrzeug und der in Fahrzeuglängsrichtung und in vertikaler Richtung verschiebbaren Filmkamera fahrzeugnah ortsfest positioniert. Überdies wird das Display, auch wenn es im Tiefenschärfebereich der Filmkamera liegt, bei auf das Objekt genau eingestelltem Objektiv der Filmkamera unscharf abgebildet, da nur der genau in der Einstellebene eines Objektivs liegende Objektpunkt scharf abgebildet wird. Außerdem ist der Kontrast des abgebildeten Displays durch das Umgebungslicht, insbesondere die Ausleuchtung für die Kameraaufnahmen verringert.

Es ist deshalb Aufgabe der Erfindung, eine Anordnung eines Displays zur Mitabbildung auf den Bildern einer Filmkamera nach dem Oberbegriff des Anspruchs 1 zu schaffen, bei der das Display stets in dem gleichen vorbestimmbaren Bereich auf den Filmbildern mit abgebildet wird, kontrastreich und scharf ist.

Diese Aufgabe wird bei einer Anordnung nach dem Oberbegriff des Anspruchs 1 durch dessen kennzeichnende Merkmale gelöst. Vorteilhafte Ausgestaltungen sind in den Unteransprüchen aufgeführt.

Erfindungsgemäß wird das im Abstand vor einem bewegten Objekt angeordnete Display im unmittelbaren Umgebungsbereich der Filmkamera, also kameranah, angeordnet und mit dieser und einem Linsensystem zur Schärfekorrektur verbunden, wobei das Linsensystem von dem Display ein Bild zur Mitabbildung auf dem jeweiligen Filmbild erzeugt. Dabei können das Display im Abstand von der Filmkamera und das Linsensystem zwischen diesem und dem Display und dem Objektiv der Filmkamera angeordnet sein. Die Anordnung kann dabei so justiert werden, daß das Display auf jedem Filmbild in einem Eckbereich abgebildet wird, der für eine Auswertung des Filmbildes bezüglich des Objektes nicht von Interesse und damit nicht störend ist. Von Vorteil ist es auch, daß die mit der Positionierung des Displays im Bereich zwischen diesem und der Filmkamera verbundene Kabelverlegung in diesem Raum entfällt.

Bei einer Scharfeinstellung des Objektivs der Filmkamera auf eine bestimmte Ebene des bewegten Objektes kann das dadurch an sich durch das Objektiv unscharf abgebildete Display über eine Korrektureinstellung des diesem vorgeschalteten Linsensystems scharf abgebildet werden. Außerdem ist der Kontrast des abgebildeten Displays gegenüber der auf dem Filmbild abgebildeten Umgebung und gegenüber dem abgebildeten Objekt groß, da das Display außerhalb der Ausleuchtungszone für das bewegte Objekt positioniert ist.

Das Display kann jedoch auch direkt am Gehäuse der Filmkamera angeordnet sein und über ein vor diesem und vor der Filmkamera angeordnetes Korrektur-Linsensystem und eine Einrichtung zur Bildumlenkung abgebildet werden. Bei dieser Anordnung wird das vom Korrektur-Linsensystem auf die Bildumlenkeinrichtung geworfene Bild vom Display in das Objektiv der Filmkamera reflektiert und bei entsprechender Korrektureinstellung des Linsensystems auf den Filmbildern scharf mit abgebildet.

Die Bildumlenkeinrichtung kann dabei eine Spiegeleinrichtung sein, die aus mindestens zwei Spiegeln gebildet ist, von denen der dem Linsensystem zugewandte Spiegel das virtuelle Bild in den anderen Spiegel wirft und dieser das Bild in das Objektiv der Filmkamera reflektiert. Dabei kann ersterer Spiegel starr und letzterer verstellbar angeordnet sein, um die Abbildung des Display auf dem Filmbild vorbestimmt positionieren zu können.

Um eine Bildschärfekorrektur einfach vornehmen zu können, sind das Korrektur-Linsensystem und das Display relativ zueinander bewegbar angeordnet, wobei ein Scharfstellung des Displays in der Handhabung vereinfacht ist, wenn dieses gegenüber einem feststehenden Linsensystem verstellbar ist.

Das Display, das Korrektur-Linsensystem, das Spiegelsystem und die Filmkamera sind mechanisch miteinander gekoppelt.

Vorteilhaft kann die vorbeschriebene Anordnung im Zusammenwirken mit einer Hochgeschwindigkeitskamera bei einem Crash-Test zur Ermittlung des Unfallverhaltens von Fahrzeugen verwendet werden, die verschiebbar, neigbar und schwenkbar im Abstand vom Crash-Fahrzeug angeordnet ist.

Neben der Crashzeit können auch eine Versuchsnummer, welche früher am Fahrzeug selbst angebracht war, die Fahrzeuggeschwindigkeit oder andere versuchsrelevante Daten auf dem Display abgebildet sein.

Die Erfindung wird nachstehend an einem Ausführungsbeispiel erläutert. In der zugehörigen Zeichnung zeigen schematisch:
- Fig. 1:: die Anordnung einer Filmkamera zum Filmen eines Crash-Testes,
- Fig. 2:: die erfindungsgemäße Anordnung eines Displays zur Mitabbildung auf den Filmbildern und
- Fig. 3:: ein Filmbild mit einem vorbestimmten Bildbereich für die Abbildung des Displays.

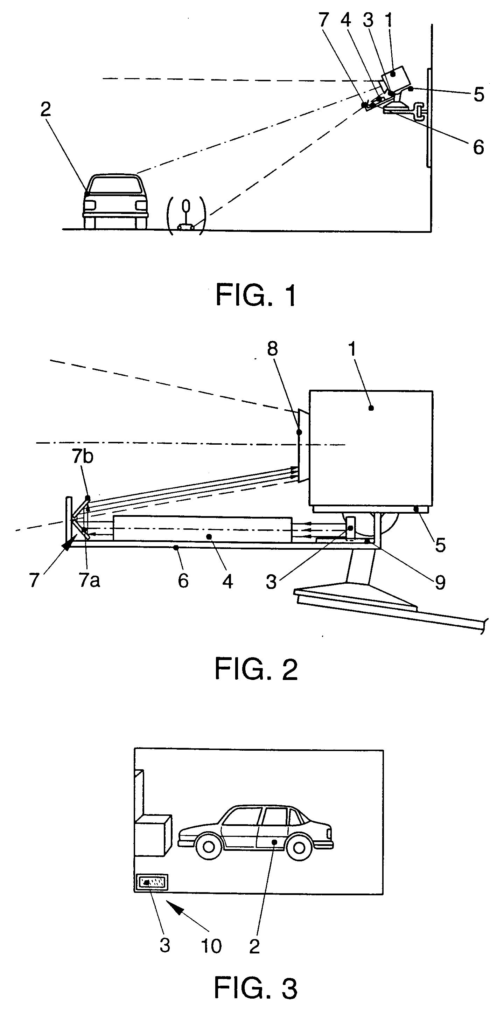

In Fig. 1 ist die Anordnung einer Hochgeschwindigkeits-Filmkamera 1 zum Filmen der bei einem Crash-Test an einem Fahrzeug 2 auftretenden Karosserieverformungen und -zerstörungen dargestellt. In der Darstellung ist auch ein Display zur Mitabbildung auf den Filmbildern im Abstand vor dem zu filmenden Fahrzeug 2 in einer bisher üblichen Position in Klammern gezeigt. Die Filmkamera 1 ist in bekannter Weise vertikal und horizontal verschiebbar, neig- und schwenkbar angeordnet. Erfindungsgemäß ist ein LED-Ziffern-Display 3 im Bereich der Filmkamera 1 angeordnet und mit dieser und mit einem Linsensystem 4 zur Schärfekorrektur gekoppelt. Ebensogut könnte ein Punkt-Matrix-Display angeordnet sein.

Bei der dargestellten erfindungsgemäßen Anordnung, die in Fig. 2 vergrößert gezeigt ist, sind das Display 3 und das Linsensystem 4 an einem an einer Montageplatte 5 für die Filmkamera 1 befestigten Halterungsarm 6 gehaltert, wobei das Display 3 unter der Filmkamera 1 und das Linsensystem 4 auf dem Halterungsarm 6 im Bereich vor dieser positioniert sind. Auf der dem Display 3 abgewandten Seite des Linsensystems 4 ist des weiteren ein Spiegelsystem 7 mit zwei Spiegeln 7a und 7b zur Bildumlenkung angeordnet, daß das vom Linsensystem erzeugte Bild zur Mitabbildung auf den Filmbildern in das Filmkameraobjektiv 8 reflektiert. In diesem System ist der dem Linsensystem 4 zugewandte Spiegel 7a fest in einem Winkel von 45° zur optischen Achse des Linsensystems 4 angeordnet und der Spiegel 7b schwenk- und neigbar gegenüber dem Spiegel 7a. Das Display 3 ist am Halterungssystem 6 an einer Prismenführung 9 gegenüber dem Linsensystem 4 verschiebbar gehaltert.

Diese Anordnung gestattet es, das Display 3 und dessen Anzeige auf jedem Filmbild, das die Filmkamera 1 vom Crash-Vorgang aufnimmt, in einem vorbestimmten Bildbereich 10 scharf abzubilden. Fig. 3 zeigt den bevorzugten Bildbereich 10. Das durch eine entsprechende Einstellung des Spiegels 7b in den Bildbereich 10 reflektierte Bild 11 des Displays 3 bleibt auch dann in diesem Bereich 10, wenn die Kamera verschoben, geneigt oder geschwenkt wird. Die auf diesem Bildbereich 10 justierte Enblendung des Displays 3 verdeckt keine für eine Auswertung des Crash-Vorganges erforderlichen Bildausschnitte und ist somit nicht störend.

## Patentansprüche

1. Anordnung eines Displays zur Mitabbildung auf den Bildern einer Filmkamera, bei der das Display im Abstand vor einem zu filmenden bewegten Objekt angeordnet ist, **dadurch gekennzeichnet,** daß das Display (3) filmkameranah angeordnet ist und mit der Filmkamera (1) und mit einem Linsensystem (4) zur Schärfekorrektur verbunden ist, das im Zusammenwirken mit dem Objektiv (8) der Filmkamera (1) von dem Display (3) ein scharfes Bild (11) auf dem jeweiligen Filmbild erzeugt.

2. Anordnung nach Anspruch 1, **dadurch gekennzeichnet,** daß das Display (3) direkt an der Filmkamera (1) angeordnet und das Linsensystem (4) vor diesem und im Bereich vor der Filmkamera (1) angeordnet ist, und daß das Display (3) durch das Linsensystem (4) und eine geeignete Einrichtung (7) zur Bildumlenkung in das Objektiv (8) der Filmkamera (1) reflektiert und in einem vorbestimmten Bereich (10) des jeweiligen Filmbildes scharf abgebildet ist.

3. Anordnung nach Anspruch 2, **dadurch gekennzeichnet,** daß die Einrichtung (7) ein Spiegelsystem mit wenigstens zwei Spiegeln (7a; 7b) ist, von denen der dem Linsensystem (4) zugewandte Spiegel (7a) das Bild in den anderen Spiegel (7) und dieser das Bild in das Objektiv (8) der Filmkamera (1) reflektiert.

4. Anordnung nach Anspruch 3, **dadurch gekennzeichnet,** daß der dem Linsensystem (4) zugewandte Spiegel (7a) starr und der andere Spiegel (7b) einstellbar angeordnet ist.

5. Anordnung nach einem der Ansprüche 1 bis 4, **dadurch gekennzeichnet,** daß das Display (3) und das Linsensystem (4) relativ zueinander verschiebbar sind.

6. Anordnung nach einem der Ansprüche 1 bis 5, **dadurch gekennzeichnet,** daß das Linsensystem (4) und das Display (3) verschiebbar angeordnet sind.

7. Anordnung nach Anspruch 3, 4 oder 5, **dadurch gekennzeichnet,** daß das Display (3), das Linsensystem (4) und das Spiegelsystem (7) an einem gemeinsamen, mit der Filmkamera (1) verbundenen Halterungsarm (6) angeordnet sind.

8. Anordnung nach Anspruch 1 oder einem der nachfolgenden Ansprüche, **dadurch gekennzeichnet,** daß diese bei einer verschiebbaren, neig- und schwenkbaren Hochgeschwindigkeitskamera beim Crash-Versuch zur Ermittlung des Unfallverhaltens von Fahrzeugen (2) verwendet wird.

9. Anordnung nach Anspruch 8, **dadurch gekennzeichnet,** daß auf dem Display (3) eine Zeit und/oder eine Geschwindigkeit und/oder eine Versuchsnummer abgebildet sind.
